# EUROPEAN PATENT APPLICATION

(11) **EP 4 598 101 A1**
(43) Date of publication of application: **06.08.2025**
(21) Application number: 23886153.8
(22) Date of filing: 27.10.2023
(51) Int. Cl.: H04W 24/02, H04W 8/02, H04L 41/14

(54) **METHOD AND APPARATUS FOR PROVIDING ANALYTICS INFORMATION ON UE IN WIRELESS COMMUNICATION SYSTEM**

(30) Priority: 01.11.2022 KR 20220143802
(71) Applicant: Samsung Electronics Co., Ltd., Suwon-si, Gyeonggi-do 16677 (KR)
(72) Inventor: PARK, Jungshin, Suwon-si, Gyeonggi-do 16677 (KR); SUH, Dongeun, Suwon-si, Gyeonggi-do 16677 (KR)
(74) Representative: Gulde & Partner
(86) International application number: PCT/KR2023/016917
(87) International publication number: WO 2024/096457

(57) **Abstract**

The present disclosure relates to a 5G or 6G communication system for supporting higher data transmission rates. In addition, the present disclosure proposes a method for providing analytics information on user equipment (UE) in a mobile communication system to an application server, etc., which can be used, for example, in case that an application provider wishes to use the UE analytics information, for example, to improve the performance of an application, through a contract with a telecommunications carrier.

## Description

### [Technical Field]

The present disclosure relates to a wireless communication system, and more particularly, to a method and apparatus for analyzing and providing data on a UE in a wireless communication system. In addition, the present disclosure relates to a method and apparatus for analyzing data on a UE in a wireless communication system and providing the analyzed data to a server (e.g., an application server).

### [Background Art]

5G mobile communication technology defines a wide frequency band to enable fast transmission speeds and new services, and can be implemented not only in a sub-6GHz frequency band such as 3.5 gigahertz (3.5GHz), but also in an ultra-high frequency band ('above 6GHz') called millimeter wave (mmWave) such as 28GHz and 39GHz. In addition, in the case of 6G mobile communication technology, which is called systems beyond 5G communication, implementation in a terahertz band (e.g., 95GHz to 3 terahertz (3THz) band) is being considered to achieve a transmission speed that is 50 times faster than the 5G mobile communication technology and an ultra low latency time that is reduced by 1/10.

In the early stages of the 5G mobile communication technology, with the goal of ensuring service support and performance requirements for enhanced mobile broadband (eMBB), ultra-reliable low-latency communications (URLLC), and massive machine-type communications (mMTC), standardization has been made for beamforming and massive MIMO for mitigating a path loss of radio waves in a ultra-high frequency band and increase a transmission distance of the radio waves, support for various numerologies for efficient utilization of ultra-high frequency resources (operation of multiple subcarrier intervals, etc.) and dynamic operation of slot formats, initial access technology for supporting multi-beam transmission and broadband, definition and operation of a band-wide part (BWP), new channel coding methods, such as a low density parity check (LDPC) code for large-scale data transmission and a polar code for high reliable transmission of control information, L2 pre-processing, network slicing providing a dedicated network specialized for a specific service, etc.

Currently, discussions are underway for improvement and performance enhancement of the initial 5G mobile communication technology in consideration of services that the 5G mobile communication technology is intended to support, and physical layer standardization is in progress for technologies such as vehicle-to-everything (V2X) to help autonomous vehicles determine their driving based on their own locations and status information that the autonomous vehicles transmit and to increase user convenience, new radio unlicensed (NR-U) for system operation that meets various regulatory requirements in an unlicensed band, NR UE low power consumption technology (UE power saving), a non-terrestrial network (NTN) that is UE-satellite direct communication to secure coverage in areas where communication with a terrestrial network is impossible, and positioning.

In addition, standardization of wireless interface architecture/protocol fields is in progress for technologies such as industrial Internet of Things (IIoT) for supporting new services through linkage and convergence with other industries, integrated access and backhaul (IAB) that integrates and supports wireless backhaul links and access links to provide nodes for expanding network service areas, mobility enhancement including conditional handover and dual active protocol stack (DAPS) handover, and 2-step RACH for NR that simplifies random access procedures, and standardization of system architecture/service fields is also in progress for 5G baseline architecture (e.g., service based architecture, and service based interface) for combining network functions virtualization (NFV), software-defined networking (SDN) technology, mobile edge computing (MEC) that receives services based on a location of a UE, etc.

When such 5G mobile communication systems are commercialized, an explosive increase in connected devices will be connected to a communication network, so it is expected that improved functionality and performance of the 5G mobile communication systems and the integrated operation of the connected devices will be required. To this end, new researches are expected to be conducted on eXtended reality (XR) to efficiently support augmented reality (AR), virtual reality (VR), and mixed reality (MR), etc., improvement in 5G performance and reduction in complexity using artificial intelligence (AI) and machine learning (ML), AI service support, metaverse service support, drone communications, etc.

In addition, the development of these 5G wireless systems may serve as a basis for the development of not only multi-antenna transmission technology such as new waveform, full dimensional MIMO (FD-MIMO), array antenna, and large scale antenna to ensure coverage in the terahertz band of 6G mobile communication technology, high-dimensional spatial multiplexing technology using metamaterialbased lenses and antennas and orbital angular momentum (OAM) to improve the coverage of terahertz band signals, and reconfigurable intelligent surface (RIS) technology, but also full duplex technology for enhancing frequency efficiency and improving a system network of 6G mobile communication technology, AI-based communication technology that utilizes satellite and AI from the design stage and incorporates end-to-end AI support functions to realize system optimization, and next generation distributed computing technology that realizes services with complexity that exceeds the limits of UE computing capabilities by utilizing ultra-highperformance communication and computing resources, etc.

### [Disclosure]

### [Technical Problem]

The technical problem to be achieved in the embodiment of the present disclosure is to provide a method and apparatus for analyzing data on a UE and providing the analyzed data to a server.

A need exists for a method for a wireless communication system to collect and analyze data related to a communication status, an operation status, etc., of a UE to improve the performance of an application of the UE and to provide the analyzed information to be utilized for performance improvement. In particular, in the wireless communication system, a function of providing information may be restricted by region due to movement or roaming of the UE. Therefore, a need exists for a method for providing information from a wireless communication system to an application server, etc., by considering these restrictive factors.

### [Technical Solution]

According to an embodiment of the present disclosure for solving the above problems, there may be provided a method for selecting a network data analytics function suitable for providing information requested by an application provider by considering a movement location and network configuration information of a UE, and providing information through the selected network data analytics function.

According to an embodiment of the present disclosure, a method performed by a network data analytics function may include receiving a request message related to analytics information of a UE from an application function, transmitting a location information request message related to the UE to an access and mobility management entity (AMF) based on a reception of the request message, receiving a location information response message including location information of the UE from the AMF, determining whether the network data analytics function is able to provide the analytics information of the UE requested by the application function based on the location information response message including the location information of the UE, and transmitting, to the application function, a response message including information indicating whether the provision of the analytics information of the UE requested by the application function is possible.

In addition, according to an embodiment of the present disclosure, a network data analytics function may include a transceiver, and a controller, in which the controller may control to receive a request message related to analytics information of a UE from an application function, transmit a location information request message related to the UE to an access and mobility management entity (AMF) based on a reception of the request message, receive a location information response message including location information of the UE from the AMF, determine whether the network data analytics function is able to provide the analytics information of the UE requested by the application function based on the location information response message including the location information of the UE, and transmit, to the application function, a response message including information indicating whether the provision of the analytics information of the UE requested by the application function is possible.

The technical problem to be achieved in the embodiment of the present disclosure are not limited to the above-described objects, and other objects that are not mentioned may be obviously understood by those having ordinary skill in the art to which the present disclosure pertains from the following description.

### [Effect of the Invention]

According to various embodiments of the present disclosure, it is possible to the method and apparatus for analyzing data on a UE in a wireless communication system and providing the analyzed data to the server (e.g., the application server).

### [Description of Drawings]

FIG. 1 illustrates a structure of a wireless communication system according to the present disclosure.
FIG. 2 illustrates a general operation for providing analytics information to an application provider's server when a UE moves its location during communication in a wireless communication system according to an embodiment of the present disclosure.
FIG. 3 illustrates a signaling procedure of a wireless communication system for selecting a network data analytics function suitable for providing analytics information requested by an application server and providing the requested analytics information to the application server according to an embodiment of the present disclosure.
FIG. 4 illustrates a signaling procedure of a wireless communication system for selecting a suitable network data analytics function according to the movement of the UE, receiving analysis results, and providing the analysis results to the application server according to an embodiment of the present disclosure.
FIG. 5 illustrates a signaling procedure of a wireless communication system for selecting a suitable network data analytics function according to the movement of a UE and providing analytics information requested by an application server through subscription transfer to provide the analytics information to the application server according to an embodiment of the present disclosure.
FIG. 6 is a diagram illustrating a structure of a terminal according to an embodiment of the present disclosure.
FIG. 7 is a diagram illustrating a structure of a network entity performing a network function according to an embodiment of the present disclosure.

### [Mode for Disclosure]

Hereinafter, embodiments of the present invention will be described in detail with reference to the accompanying drawings. At this time, it is noted that like reference numerals denote like components in the accompanying drawings. Moreover, detailed descriptions related to well-known functions or configurations will be ruled out in order not to unnecessarily obscure the subject matter of the present invention.

In describing the embodiments in the present specification, descriptions of technical contents that are well known in the technical field to which the present invention pertains and are not directly related to the present invention will be omitted. This is to more clearly convey the gist of the present invention without ambiguity by omitting unnecessary explanations.

For the same reason, some components in the accompanying drawings are exaggerated, omitted, or schematically illustrated. In addition, the size of each component does not entirely reflect the actual size. The same reference numerals are assigned to the same or corresponding components in each drawing.

Various advantages and features of the present invention and methods accomplishing the same will become apparent from the following detailed description of embodiments with reference to the accompanying drawings. However, the present disclosure is not limited to exemplary embodiments to be described below, but may be implemented in various different forms, these exemplary embodiments will be provided only in order to make the present disclosure complete and allow those skilled in the art to completely recognize the scope of the present disclosure, and the present disclosure will be defined by the scope of the claims. Throughout the specification, the same components will be denoted by the same reference numerals.

In this case, it will be appreciated that each block of a processing flowchart and combinations of the flowcharts may be executed by computer program instructions. Since these computer program instructions may be mounted in a processor of a general computer, a special computer, or other programmable data processing apparatuses, these computer program instructions executed through the processor of the computer or the other programmable data processing apparatuses create means performing functions described in a block(s) of the flow chart. Since these computer program instructions may also be stored in a computer-available or computer-readable memory that may direct a computer or other programmable data processing device to implement a function in a specific scheme, the computer program instructions stored in the computer usable or computer readable memory can also produce manufacturing articles including instruction means performing the functions described in the block(s) of the flowchart. Since the computer program instructions may also be mounted on the computer or the other programmable data processing apparatuses, the instructions performing a series of operation steps on the computer or the other programmable data processing apparatuses to create processes executed by the computer, thereby executing the computer or the other programmable data processing apparatuses may also provide steps for performing the functions described in a block(s) of the flowchart.

In addition, each block may indicate some of modules, segments, or codes including one or more executable instructions for executing a specific logical function(s). Further, it is to be noted that functions mentioned in the blocks occur regardless of an order in some alternative embodiments. For example, two blocks that are continuously illustrated may be simultaneously performed in fact or be performed in a reverse sequence depending on corresponding functions.

In this case, the term "~unit" used in the present embodiment means software or hardware components such as FPGA or ASIC, and "~unit" performs certain roles. However, '~ unit' is not limited to the software or the hardware. The "~unit" may be configured to be stored in a storage medium that can be addressed or may be configured to reproduce one or more processors. Accordingly, as an example, the "~unit" includes components such as software components, object-oriented software components, class components, and task components, processes, functions, attributes, procedures, subroutines, segments of program code, drivers, firmware, microcode, circuits, data, databases, data structures, tables, arrays and variables. Components and functions provided within "~unit" may be combined into a smaller number of components and "~unit" or may be further separated into additional components and "~unit." In addition, components and "~ units" may be implemented to reproduce one or more central processing units (CPUs) in a device or a security multimedia card.

Hereinafter, a base station is an entity that performs resource allocation of a terminal, and may be at least one of a Node B, a base station (BS), an eNode B (eNB), a gNode B (gNB), a wireless access unit, a base station controller, or a node on a network. The terminal may include user equipment (UE), a mobile station (MS), a cellular phone, a smartphone, a computer, or a multimedia system capable of performing a communication function. In addition, the embodiments of the present disclosure may be applied to other communication systems having similar technical backgrounds or channel types to the embodiments of the present disclosure described below. In addition, the embodiments of the present disclosure may be applied to other communication systems through some modifications without significantly departing from the scope of the present disclosure as determined by a person having skilled technical knowledge. For example, 5G generation mobile communication technologies (new radio (NR)) developed after the LTE-A may be included in the system, and the 5G below may be a concept that includes the existing LTE, LTE-A, and other similar services. In addition, the present disclosure may be applied to other communication systems through some modifications without significantly departing from the scope of the present disclosure as determined by a person having skilled technical knowledge.

In the following description, terms for identifying connection nodes, terms referring to network entities or network functions (NFs), terms referring to messages, terms referring to interfaces between network entities, terms referring to various types of identification information, etc., are provided for the convenience of description. Accordingly, the present invention is not limited to terms described below, and other terms referring to objects having equivalent technical meanings may be used.

Hereinafter, for convenience of description, the present invention uses terms and names defined in the 3rd generation partnership project long term evolution (3GPP LTE) and 5G standards. However, the present invention is not limited to the above terms and names, and may be equally applied to systems that follow other standards.

For convenience of description below, the names of NFs (e.g., access and mobility management function (AMF), session management function (SMF), network slice selection function (NSSF), etc.) are used for targets exchanging information for access control and status management. However, the embodiments of the present invention may be applied equally even in case that the NFs are actually implemented as instances (which are an AMF instance, an SMF instance, an NSSF instance, etc., respectively).

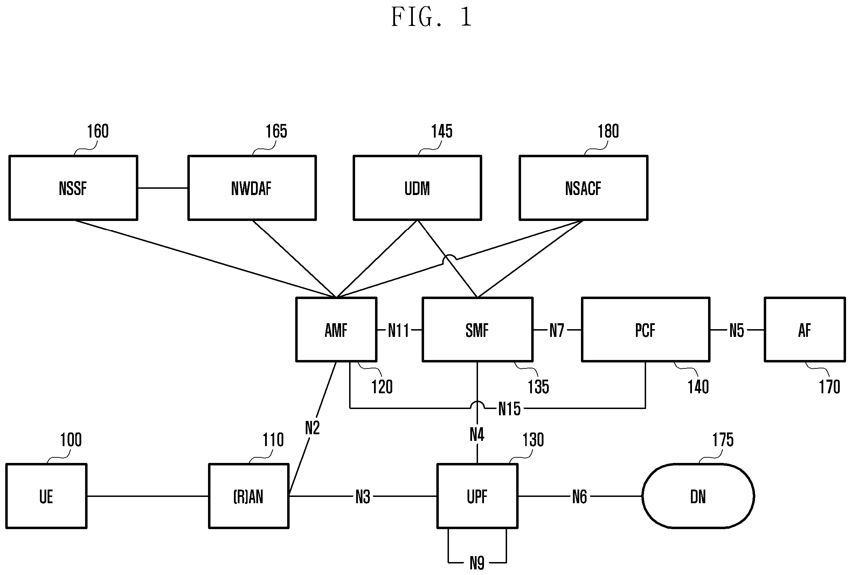

FIG. 1 illustrates a system structure of a wireless communication system (5GS) according to the present disclosure. The 5GS may be composed of a 5G core network, a base station 110, a UE 100, etc. The 5G core network (or 5GS) may be composed of an AMF 120, an SMF 135, a user plane function (UPF) 130, a policy control function (PCF) 140, a user data management (UDM) 145, an NSSF 160, a network data analytics function (NWDAF) 165, an application function (AF) 170, a network slice admission control function (NSACF) 180, a non-3GPP function (N3F), etc.

The UE 100 may access the 5G core network through a radio access network (RAN) base station 110 (hereinafter, referred to as a base station). The base station 110 may support a 3GPP access network (e.g., NR, E-UTRA, etc.) or a non-3GPP access network (e.g., WiFi, etc.) type. The UE 100 may be connected to the AMF 120 by an N2 interface and to the UPF 130 by an N3 interface through the base station 110. In addition to the base station, the base station 110 may be referred to as an 'access point (AP)', 'eNodeB (eNB)', '5th generation node (5G node)', 'gNodeB (gNB)', or other terms having a technical meaning equivalent thereto. The N3F is an NF that operates as N2 interface and N3 interface terminations for the UE 100 accessed through a non-3GPP access network (e.g., WiFi, etc.) not defined in the 3GPP. The N3F may process N2 control plane signaling and N3 user plane packets.

The AMF 120 is an NF that manages wireless network access and mobility for the terminal (UE). The SMF 135 is an NF that manages a session for the UE, and session information includes quality of service (QoS) information, charging information, and information on packet processing. The UPF 130 is an NF that processes user traffic (user plane traffic) and is controlled by the SMF 135. The PCF 140 is an NF that manages an operator policy for providing services in the wireless communication system. The UDM 145 is an NF that stores and manages subscriber information of the UE (UE subscription). A unified data repository (UDR) is an NF that stores and manages data. The UDR may store the UE subscription information, and provide the UE subscription information to the UDM 145. In addition, the UDR may store operator policy information and provide operator policy information to the PCF 140. The NWDAF 165 is an NF that provides analytics information for the operation of the 5G system. The NWDAF 165 may collect data from other NFs or operations, administration and maintenance (OAM) constituting the 5G system, analyze the collected data, and provide the analysis results to other NFs. The NSACF 180 is an NF that monitors and controls the number of registered UEs and sessions of a network slice that is a target of network slice admission control (NSAC). The NSACF 180 stores configuration information on the maximum number of registered UEs and the maximum number of sessions for each network slice.

Hereinafter, for convenience of description, targets exchanging information for access control and status management will be collectively described as the NF. However, the embodiments disclosed in the present invention may be applied equally even when the NFs are actually implemented as instances (which are the AMF instance, the SMF instance, the NSSF instance, etc., respectively).

In the present disclosure, the instance may refer to a state in which a specific NF exists in the form of software code, and the instance is executable by being allocated physical or/and logical resources from a computing system in order to perform the function of the NF in a physical computing system such as a specific computing system existing on a core network. Accordingly, the AMF instance, the SMF instance, and the NSSF instance each may refer to a state in which they may be used by being allocated physical or/and logical resources from the specific computing system existing on the core network to perform the AMF, SMF, and NSSF operations. As a result, the existing physical AMF, SMF, and NSSF entities and the AMF instance, the SMF instance, and the NSSF instance that may be allocated and used the physical or/and logical resources from the specific computing system existing on the network to perform the AMF, SMF, NSSF operations may perform the same operation. Therefore, in the embodiment of the present disclosure, matters described as the NF (AMF, SMF, UPF, NSSF, NRF, SCP, etc.) or the NF entity (AMF entity, SMF entity, UPF entity, NSSF entity, NRF entity, SCP entity, etc.) may be replaced with an NF instance, or conversely, matters described as the NF instance may be replaced with the NF (or NF entity) and applied. Similarly, matters described as a network slice in the embodiment of the present disclosure may be replaced with a network slice instance, or conversely, matters described as the network slice instance may be replaced with the network slice and applied.

According to an embodiment of the present disclosure, in the 5G system defined by the 3GPP, one network slice may be referred to as single-network slice selection assistance information (S-NSSAI). The S-NSSAI may be composed of a slice/service type (SST) value and a slice differentiator (SD) value. The SST may indicate characteristics of services (e.g., eMBB, IoT, URLLC, V2X, etc.) supported by the slice. The SD may be a value used as an additional identifier for a specific service referred to as SST.

The NSSAI may be composed of one or more S-NSSAIs. Examples of the NSSAI may include configured NSSAI stored in the UE, requested NSSAI requested by the UE, allowed NSSAI decided by the NF of the 5G core network (e.g., AMF, NSSF, etc.) that the UE is allowed to use, subscribed NSSAI to which the UE is subscribed, etc., but are not limited to the above examples.

The UE 100 may be simultaneously connected to the base station 110 and registered in the 5G system. Specifically, the UE 100 may access the base station 110 to perform a UE registration procedure with the AMF 120. During the registration procedure, the AMF 120 may decide the allowed slice (allowed NSSAI) available to the UE accessing the base station 110 and allocate the decided allowed slice to the UE 100. The UE may select a specific slice and configure a PDU session for communication with an actual application server. One PDU session may include one or more quality of service (QoS) flows, and each QoS flow may provide different transmission performance necessary for each application service by configuring different QoS parameters.

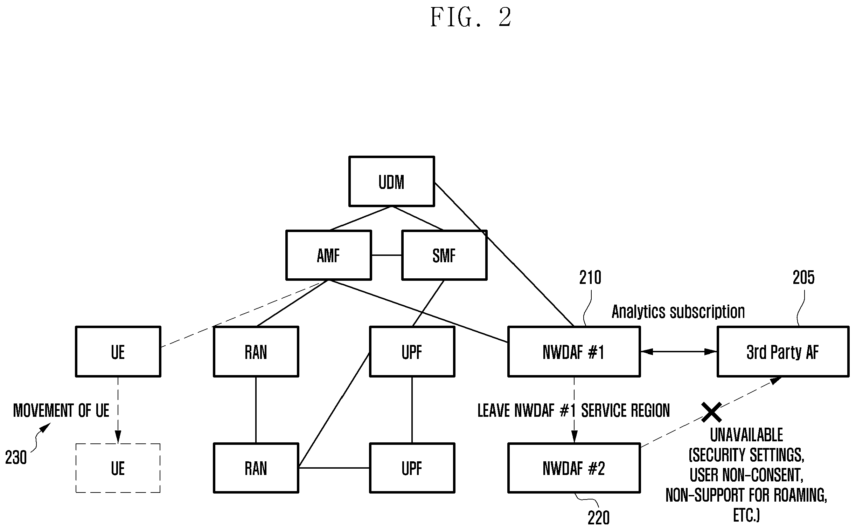

FIG. 2 illustrates a general operation for providing analytics information to an application provider's server in case that a UE moves its location during communication in a wireless communication system according to an embodiment of the present disclosure.

Describing the operation of the present disclosure with reference to FIG. 2, the application provider may request analytics information on a communication status, an operation status, a network status, etc., of a UE using an application from a wireless communication system depending on a contractual relationship, etc., with an operator of wireless communication. Depending on the trust relationship between the operator of wireless communication and the application provider, the contents of the contract, etc., a trust relationship regarding security, etc., between the wireless communication system and the server of the application provider (or application server 205) may not be established.

In order to provide the requested information depending on the trust relationship with the application provider, the contents of the contract, etc., the operator of wireless communication may designate and configure some of network data analytics functions 210 within the system to provide the analytics information. The designated network data analytics function 210 may be designated by dividing the entire service area of the wireless communication system, and may set regions while excluding certain regions as needed for security reasons, etc. Information on an information provision service area in which the designated network data analytics function and each network data analytics function may provide information to the application server 205 may be published to the application provider by the operator of wireless communication or several network data analytics functions may be designated as representatives to provide the information on the network data analytics function to the application provider without providing the information on the information provision service area.

The application server 205 of the application provider may request the designated network data analytics function 210 corresponding to the current location of the UE to provide the analytics information on the UE using the information on the network data analytics function provided by the operator of wireless communication. The network data analytics function 210 of the wireless communication system that has received the request from the application server 205 may accept or reject the information request of the application server 205 by considering the policy set by an operator for the UE and the application, user consent information on provision of information, whether roaming is supported, trust relationship with the application server, a security connection status, etc.

In case that the UE leaves a service area of the network data analytics function 210, which is currently providing information to the application server 205, due to the movement of the UE to a service area of a new base station, etc. (230), the network data analytics function 210 may perform an operation of searching for whether there is another suitable network data analytics function that may provide the analytics information requested by the application server 205 at location to which the UE has moved by considering information of the corresponding location. In case that the operator restricts the use of the network data analytics function installed in the corresponding region due to reasons such as the contractual relationship, the nonsupport for roaming, and the security and thus fails to find other replaceable network data analytics functions, the network data analytics function 210, on behalf of the application server 205, may request an appropriate network data analytics function 220 in the corresponding region to collect the analytics information requested by the application server 205 in the corresponding region or data necessary to produce the analytics information, and perform an operation of receiving the analytics information or the data necessary to produce the analytics information from the network data analytics function 220. Through the above operation process, even when the UE leaves the service region of the network data analytics function 210 due to the movement of the UE, the operator of wireless communication can provide the analytics information contracted with the application provider through the network data analytics function 210 selected in advance.

Other operations related to the UE, the RAN, the UPF, the AMF, the SMF, and the UDM will be described by referring to the description of FIG. 1.

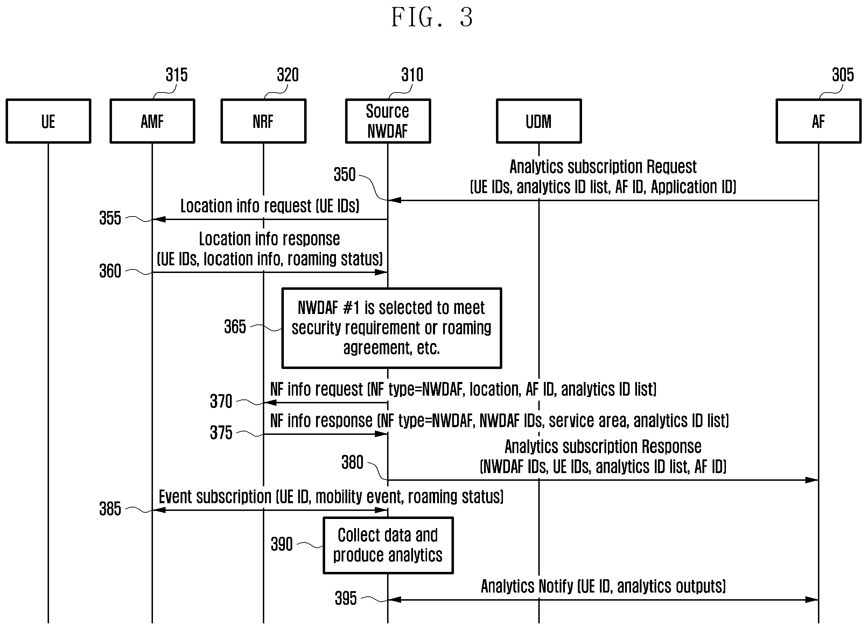

FIG. 3 illustrates a signaling procedure of a wireless communication system for selecting a network data analytics function suitable for providing analytics information requested by an application server and providing the requested analytics information to the application server according to an embodiment of the present disclosure.

In operation 350, by the request of the server of the application provider, an application function (AF) 305 may transmit a first request message (e.g., analytics subscription request message) to a network data analytics function 310 of the operator of wireless communication. Through the first request message, the AF 305 may request a network data analytics function 310 to provide the analytics information on the communication status and the operation status of the UE, etc. In this case, the application function 305 may select the network data analytics function 310 to which the request is to be transmitted by referring to the information on the network data analytics function provided by the operator of wireless communication in the contract agreement process, etc. The first request message may include at least one of pieces of information such as an identifier of a UE to be analyzed, a type of requested analytics, an identifier of an application function transmitting a request, and identifier information of an application to be analyzed that the UE is using.

The network data analytics function 310 that has received the request from the application function 305 through operation 350 may transmit a location information request message requesting location information of the UE to an AMF 315 to acquire the location information of the UE requested by the application function 305 (operation 355). The location information request message may include an identifier of a UE from which the location information is to be acquired.

The AMF 315 may transmit a location information response message including information on a location, a roaming status, etc., of the UE requested by the network data analytics function 310 to the network data analytics function 310 (operation 360). The location information response message may include at least one of information such as an identifier of a UE, the location information (e.g., Cell ID, TA list, etc.) of the corresponding UE, and the roaming status that are requested by the network data analytics function 310.

The network data analytics function 310 may determine whether to provide the analytics information requested by the application function 305 by considering the information such as the location information of the UE, the type of requested analytics by the application function, and the identifier of the application (operation 365). In addition, the application function 305 may determine whether to accept the request of the application function depending on the security and roaming, the analytics information provision policy, etc., which are set by the operator, regarding the identifier of the application function provided through the first request message, an identifier of a UE, the type of requested analytics, a service region according to a location of the UE, etc. In the example of FIG. 3, the operation of the present disclosure will be described by applying the case where the network data analytics function 310 is selected as a function suitable for providing the analytics information requested by the application function 305 according to the operator policy.

Operations 370 and 375 are examples of operations for selecting other network data analytics functions to replace in case that the network data analytics function 310, which has received the request of the application function 305, is not suitable for providing the analytics information requested by the application function 305.

The network data analytics function 310 may transmit an NF function information request message requesting information on replaceable network data analytics functions that may provide analytics information requested by an application function at a current location of the UE to a network registration function (NRF) 320 (operation 370). The network function information request message may include at least one of pieces of information such as information (NF Type=NWDAF) designating the network data analytics function and location information reflecting the current location of the UE as a type of network function to be searched, the identifier of the application function requesting the analytics information, and the type of analytics information requested.

The NRF 375 may transmit an NF function information response message including information on candidate network data analytics functions that satisfy conditions included in the network function information request message transmitted by the network data analytics function to the network data analytics function 310 (operation 375). The network function information response message may include at least one of pieces of information such as the information (NF Type=NWDAF) designating the network data analytics function as the type of the searched network function, identifiers of candidate network data analytics functions satisfying the requested condition, service area information (e.g., Cell IDs, TA list, etc.) of each candidate network data analytics function, and a type of analytics information that each candidate network data analytics function can provide to the application function. Each candidate network data analytics function is a function selected from among functions permitted to provide the analytics information to the application function according to the security and roaming, the analytics information provision policy, etc of the operator, and may be a function that provides all or only a portion of the analytics information requested by the application function 305.

The network data analytics function 310 may transmit, to the application function 305, a first response message (e.g., analytics subscription response message) including the information on whether the analytics information requested by the application function 305 can be provided in operation 310 (operation 380). In case that the network data analytics function 310 may not provide the analytics information requested by the application function, the network data analytics function 310 may select one or more of the most suitable network data analytics functions to provide the analytics information requested by the application function 305 among the candidate network data analytics functions received from the NRF 320 through operations 370 and 375. The network data analytics function 310 may transmit, to the application function 305, the response message including the information on the selected network data analytics function to be replaced to provide the analytics information requested by the application function 305. The response message may include at least one of identifiers of each network data analytics function to be replaced (included only in case that replacement is necessary), identifiers of UEs from which the network data analytics function may provide the analytics information, a type of analytics information that can be provided for the corresponding UEs, identifier information of an application function, etc.

The network data analytics function 310 that has accepted the request of the application function 305 may perform an event subscription procedure of requesting the AMF 315 to provide the event information on the movement of the UE in order to track the changes in the locations (e.g., Cell IDs, TA list, etc.) due to the movement of the UE (operation 385). For example, the network data analytics function 310 may transmit the event subscription request message to the AMF 315, and the event subscription request message may include an identifier of a UE, an indicator designating a UE movement event, an indicator designating a roaming status change event, etc., to designate the type of UEs and events to be tracked. After this event subscription procedure, the AMF 315 may notify the network data analytics function 310 that the event has occurred in case that the event such as the change in the location of the UE or the change in the roaming status occurs.

The network data analytics function 310 may perform a process of collecting and analyzing UE communication status information, operation status information, network status information, etc., necessary to provide the analytics information requested by the application function 305 (operation 390). The network data analytics function 310 may collect and analyze data for providing the analytics information requested by the application function according to preconfigured information or until the report of the collected information is triggered.

The network data analytics function 310 may transmit the produced analytics information to the application function 305 (operation 395). The network data analytics function 310 may transmit the produced analytics information to the application function 305 according to a preset cycle or whether the condition for triggering the report of the analytics information is satisfied.

The application function 305 may transmit the analytics information to the application server of the application provider, and the application server 305 may utilize the received analytics information to improve its function.

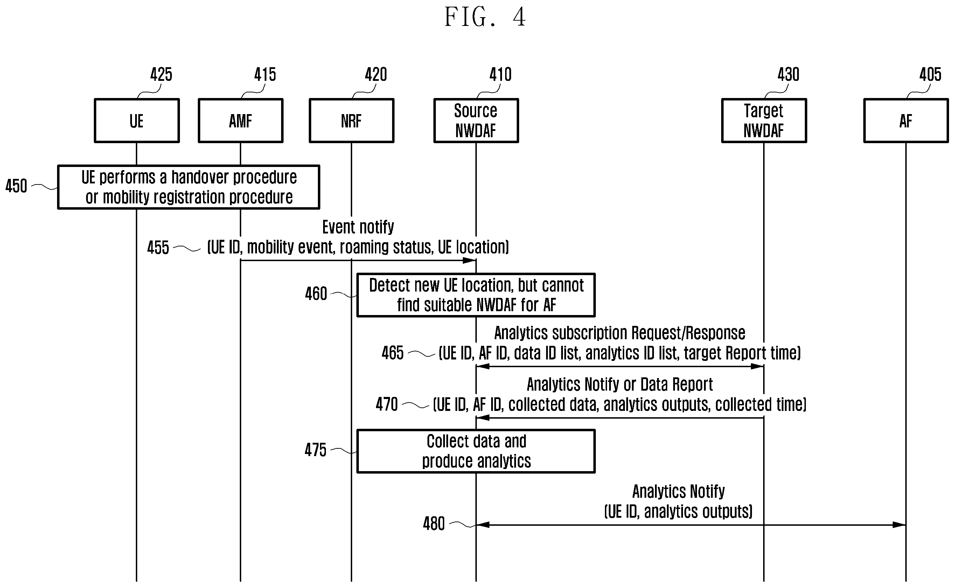

FIG. 4 illustrates a signaling procedure of a wireless communication system for selecting a suitable network data analytics function according to the movement of the UE, receiving analysis results, and providing the analysis results to the application server according to an embodiment of the present disclosure.

A UE 425 may move its location during serving and, if necessary, may perform a handover procedure or a registration procedure according to the movement with the network (operation 450).

An AMF 415 may transmit an event report message (e.g., an event notify message) including information indicating that the event where the location of the UE changes has occurred to a network data analytics function 410. The report message may include at least one of an identifier of a UE where the event has occurred, a type of event (i.e., a location movement event, a roaming status change event, etc.), current location information of the UE after the event has occurred, etc.

The network data analytics function 410 may identify new location information of the UE and, accordingly, determine whether to newly select a network data analytics function to provide analytics information requested by the application function 405 at the current location where the UE has changed (operation 460). In case that it is determined that a new network data analytics function is to be selected, the network data analytics function 410 may perform the processes of operations 370 and 375 of FIG. 3, if necessary. In addition, information on a candidate network data analytics function may be requested to an NRF 420, and information on a candidate network data analytics function may be received from the NRF 420. In case that there is no network data analytics function configured by an operator to provide the analytics information at the current location where the UE has changed, a new network data analytics function to replace is selected. Instead of transferring the subscription information for providing the analytics information requested by the application function 405, the network data analytics function 410 may determine to select a new network data analytics function that may collect and provide the analytics information or the information necessary for analytics requested by the application function 405 at the corresponding location, and to perform a procedure of requesting the collection and provision of necessary information.

The network data analytics function 410 may transmit the analytics information requested by the application function 405 or an analytics subscription request message requesting to collect and provide the information necessary for analytics to the network data analytics function 430 selected through operation 460 (operation 465). This request can be performed with several network data analytics functions as needed for all or part of the analytics functions requested by the application function 405. The analytics subscription request message can include at least one of pieces of information such as an identifier of a UE to be analyzed, an identifier of an application function requesting analytics information, a type of analytics information, a type of communication status or operation status information of a UE that needs to be collected for analytics, and target time information for which the collected information is to be reported. In addition, the network data analytics function 430 may transmit an analytics subscription response message to the network data analytics function 410 (operation 465). It is possible to respond that the network data analytics function 410 can perform the requested operation through the analytics subscription response message.

The network data analytics function 430 may transmit a message (e.g., analytics notify message or data report message) including the information collected for the UE requested in operation 465 or the analytics information to the network data analytics function 410 (operation 470). The message may be an analytics notify report message or a data report message. The message may include at least one of pieces of information such as an identifier of a UE that is a target of analysis and information collection, an identifier of an application function requesting the collected analytics information, analytics information, or status information of the UE, or information on the time for which the analytics information or the collected information is generated.

The network data analytics function 410 may collect additionally necessary information in addition to the analytics information received in operation 470 or the collected status information of the UE, and may generate final analytics information to be provided to the application function 405 using the collected results, the received analytics information, etc. (operation 475).

The network data analytics function 410 may transmit an analytics report message (e.g., analytics notify message) including analytics information of the UE requested by the application function 405 to the application function 405 (operation 480). The message may include at least one of pieces of information such as the identifier of the UE to be analyzed and the analytics information. The operation of FIG. 3 and the operation of FIG. 4 may be combined. For example, it is noted that the operation of FIG. 4 may be performed in case that the event has occurred due to the movement of the UE, etc., after the configuration according to the operation of FIG. 3.

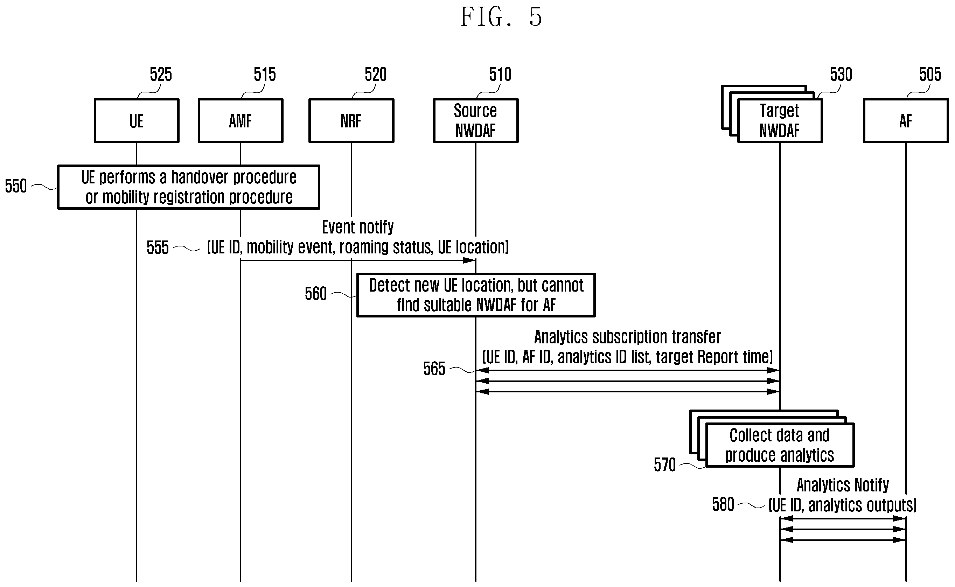

FIG. 5 illustrates a signaling procedure of a wireless communication system for selecting a suitable network data analytics function according to the movement of a UE and providing analytics information requested by an application server through subscription transfer to provide the analytics information to the application server according to an embodiment of the present disclosure.

A UE 525 may move its location during serving and, if necessary, may perform a handover procedure or a registration procedure according to the movement with the network (operation 550).

An AMF 515 may transmit an event report message (e.g., an event notify message) including information indicating that the event where the location of the UE changes has occurred to a network data analytics function 510. The report message may include at least one of pieces of information on an identifier of a UE where the event has occurred, a type of event (i.e., a location movement event, a roaming status change event, etc.), current location information of the UE after the event has occurred, etc.

The network data analytics function 510 may identify new location information of the UE and, accordingly, determine whether to newly select a network data analytics function to provide analytics information requested by the application function 505 at the current location where the UE has changed (operation 560). In case that it is determined that a new network data analytics function is to be selected, the network data analytics function 510 may perform the processes of operations 370 and 375 of FIG. 3, if necessary. In addition, information on a candidate network data analytics function may be requested to an NRF 520, and information on a candidate network data analytics function may be received from the NRF 520.

The network data analytics function 510 selects the network data analytics functions suitable for providing the analytics information requested by the application function 505 at the current location of the UE from the candidate network data analytics functions received from the NRF 520 and performs the analytics subscription transfer procedure with the selected network data analytics functions (operation 565). In this case, in case that all of the analytics information requested by the application function using one network data analytics function may not be provided, multiple network data analytics functions may be selected so that the analytics information may be divided and provided. In the analytics subscription transfer procedure, the analytics subscription transfer request message (e.g., analytics subscription transfer message) transmitted from the network data analytics function 510 may include at least one of pieces of information such as an identifier of a UE to be analyzed, an identifier of an application function that requests analytics, a type of requested analytics, and information on a target time for which the analytics information is to be reported.

The network data analytics functions selected through operation 565 may collect necessary UE status information and produce analysis results (operation 570).

Each network data analytics function 530 may transmit an analytics report message (e.g., analytics notify) to transfer the produced analytics information to the application function 505 (operation 580). The message may include at least one of pieces of information such as the identifier of the UE to be analyzed and the analytics information.

The operation of FIG. 3, the operation of FIG. 4, and the operation of FIG. 5 may be combined. For example, it is noted that the operation of FIG. 5 may be performed in case that the event has occurred due to the movement of the UE, etc., after the configuration according to the operation of FIG. 3. In addition, among the operations of FIG. 5, the operations corresponding to the operations of FIGS. 3 and 4 refer to the description of the operations described with reference to FIGS. 3 and 4.

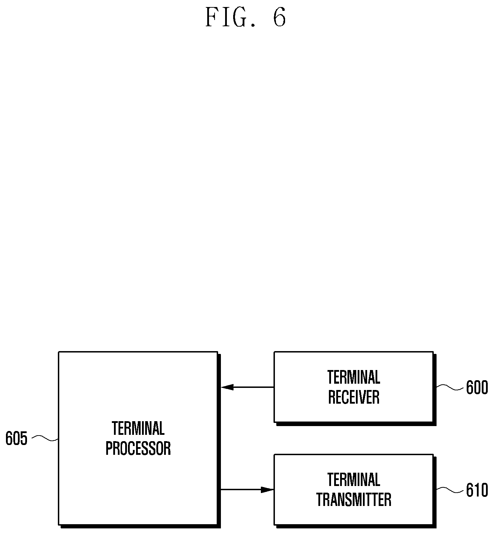

FIG. 6 is a diagram illustrating a structure of a terminal according to an embodiment of the present disclosure.

Referring to FIG. 6, the terminal may include a transceiver that refers to a terminal receiver 600 and a terminal transmitter 610, a memory (not illustrated), and a terminal processor 605 (or a terminal controller or processor). According to the above-described terminal communication method, the transceivers 600 and 610, the memory, and the terminal processor 605 of the terminal may operate. However, the components of the terminal are not limited to the above-described examples. For example, the terminal may include more or fewer components than the above-described components. In addition, the transceiver, the memory, and the processor may be implemented in the form of a single chip.

The terminal receiver 600 and the terminal transmitter 610 may be referred to as a transceiver. The transceiver may transmit and receive a signal to and from the base station. Here, the signal may include control information and data. To this end, the transceiver may be composed of an RF transmitter that up-converts and amplifies a frequency of a transmitted signal, and an RF receiver that low-noise amplifies a received signal and down-converts a frequency of the received signal. However, this is only an embodiment of the transceiver, and the components of the transceiver are not limited to the RF transmitter and the RF receiver.

In addition, the transceiver may receive a signal through a wireless channel and output the received signal to the processor, and transmit the signal output from the processor through the wireless channel.

The memory may store a program and data necessary for the operation of the terminal. In addition, the memory may store control information or data included in the signal transmitted and received by the terminal. The memory may be configured as a storage medium such as a ROM, a RAM, a hard disk, a CD-ROM, and a DVD, or a combination of storage media. In addition, there may be a plurality of memories.

The terminal processor 605 may be referred to as a processor. The processor may control a series of processes so that the terminal may operate according to the above-described embodiment. There may be a plurality of processors, and the processor may perform a component control operation of the terminal by executing the program stored in the memory.

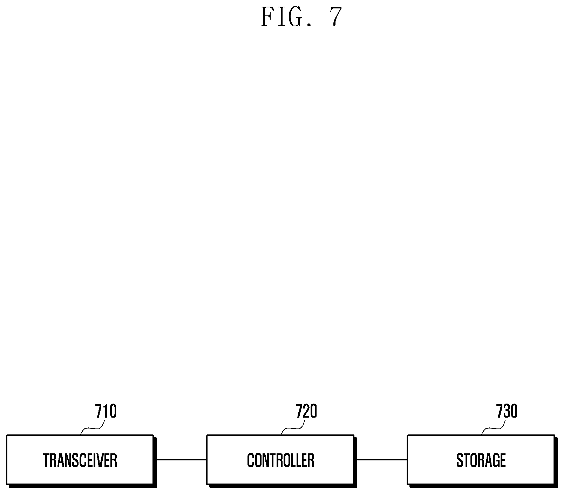

FIG. 7 is a diagram illustrating a structure of a network entity performing a network function according to an embodiment of the present disclosure.

The network entity of FIG. 7 may be one of the RAN, the AMF, the SMF, the UPF 130, the PCF, the UDM, the NSSF, the NWDAF, the DN, and the NSACF described above through embodiments of the present disclosure.

Referring to FIG. 7, the network entity performing the network function may include a transceiver 710, a controller 720, and storage 730. In the present disclosure, the controller may be defined as a circuit or an application-specific integrated circuit or at least one processor.

The transceiver 710 may transmit and receive signals to and from other network entities. For example, the transceiver 710 may transmit and receive signals or messages to and from the AMF which is the network entity that manages access to and mobility of the UE to the access network.

The controller 720 may control the overall operation of the network entity performing the network function according to the embodiments proposed in the present disclosure. For example, the controller 720 may control a signal flow between each block to perform the operation according to the flowchart described above.

The storage 730 may store at least one of the information transmitted and received through the transceiver 710 and the information generated through the controller 720.

The methods according to the embodiments described in the claims or specifications of the present disclosure may be implemented in the form of hardware, software, or a combination of hardware and software.

When implemented in software, a computer-readable storage medium storing one or more programs (software modules) may be provided. One or more programs stored in the computer-readable storage medium are configured to be executable by one or more processors in an electronic device. One or more programs include instructions for causing an electronic device to execute methods according to embodiments described in a claim or specification of the present disclosure.

Such programs (software module, software) may be stored in a random access memory, a non-volatile memory including flash memory, a read only memory (ROM), an electrically erasable programmable read only memory (EEPROM), a magnetic disc storage device, a compact disc-ROM (CD-ROM), digital versatile Discs (DVDs), any other form of optical storage device, and a magnetic cassette. Alternatively, the programs may be stored in a memory composed of a combination of some or all thereof. In addition, each configuration memory may be included in plurality.

In addition, the program may be stored in an attachable storage device that may accessed via a communication network such as the Internet, the Intranet, a local area network (LAN), wide LAN (WLAN), or a storage area network (SAN), or a combination thereof. Such a storage device may be connected to a device implementing an embodiment of the present disclosure through an external port. Additionally, a separate storage device on the communications network may be connected to the device performing the embodiments of the present disclosure.

In the specific embodiments of the present disclosure described above, components included in the disclosure are expressed in the singular or plural according to the specific embodiments presented. However, the singular or plural expression is appropriately selected for the context presented for convenience of description, and the present disclosure is not limited to the singular or plural components, and even if the component is expressed in plural, the component is configured in singular or even if the component is expressed in singular, the element may be configured in plural.

Meanwhile, the embodiments of the present disclosure disclosed in this specification and drawings present merely specific examples to easily describe the technical contents present disclosure and to help understand the present disclosure, and are not intended to limit the scope of the present disclosure. That is, it will be obvious to those skilled in the art to which the present invention pertains that other modifications based on the technical idea of the present disclosure can be realized. In addition, each embodiment may be operated in combination with each other as needed. For example, parts of an embodiment of the present disclosure and parts of another embodiment may be combined with each other to operate a base station and a terminal. In addition, the embodiments of the present disclosure are applicable to other communication systems, and other modifications based on the technical ideas of the embodiments can also be practiced.

## Claims

1. A method performed by a network data analytics function, the method comprising:
receiving a request message related to analytics information of a user equipment (UE) from an application function;
transmitting a location information request message related to the UE to an access and mobility management entity (AMF) based on a reception of the request message;
receiving a location information response message including location information of the UE from the AMF;
determining whether the network data analytics function is available to provide the analytics information of the UE requested by the application function based on the location information response message including the location information of the UE; and
transmitting, to the application function, a response message including information indicating whether the analytics information of the UE requested by the application function is available to be provided.

2. The method of claim 1,
in case that the network data analytics function determines that the analytics information of the UE requested by the application function is not available to be provided, transmitting a message requesting information on a candidate network data analytics function to a network registration function (NRF); and
receiving, from the NRF, a response message including information on the candidate network data analytics function that is available to provide the analytics information of the UE requested by the application function.

3. The method of claim 1, further comprising:
transmitting an event subscription request message requesting provision of event information on movement of the UE to the AMF; and
receiving an event report message including information indicating an occurrence of an event for the UE from the AMF in case that the event for the UE occurs.

4. The method of claim 3,
wherein the information indicating the occurrence of the event includes at least one of an identifier of a UE, a type of the event, or a current location information of the UE.

5. The method of claim 3, further comprising:
determining, based on a reception of the event report message, whether the network data analytics function is available to provide the analytics information of the UE requested by the application function; and
selecting at least one target network data analytics function that is available to provide the analytics information of the UE requested by the application function in case that the network data analytics function determines that the analytics information of the UE requested by the application function is not available to be provided.

6. The method of claim 5, further comprising:
transmitting an analytics subscription request message for provision of the analytics information of the UE requested by the application function to the target network data analytics function; and
receiving an analytics subscription response message consenting to the provision of the analytics information of the UE requested by the application function from the target network data analytics function.

7. The method of claim 5,
wherein the analytics subscription request message includes at least one of an identifier of a UE, an identifier of the application function requesting the analytics information, a type of the analytics information, a communication status of a UE requiring collection, a type of operation status information of the UE, or target time information for which collected information is to be reported.

8. The method of claim 6, further comprising:
receiving first analytics information on the UE from the target network data analytics function;
generating third analytics information based on the first analytics information on the UE received from the target network data analytics function and second analytics information for the UE collected by the network data analytics function; and
reporting the third analytics information to the application function.

9. A network data analytics function, comprising:
a transceiver; and
a controller,
wherein the controller configured to:
receive a request message related to analytics information of a user equipment (UE) from an application function,
transmit a location information request message related to the UE to an access and mobility management entity (AMF) based on a reception of the request message,
receive a location information response message including location information of the UE from the AMF,
determine whether the network data analytics function is available to provide the analytics information of the UE requested by the application function based on the location information response message including the location information of the UE, and
transmit, to the application function, a response message including information indicating whether the analytics information of the UE requested by the application function is available to be provided.

10. The network data analytics function of claim 9,
wherein the controller is configured to:
transmit a message requesting information on a candidate network data analytics function to a network registration function (NRF) in case that the network data analytics function determines that the analytics information of the UE requested by the application function is not available to be provided, and
receive, from the NRF, a response message including information on the candidate network data analytics function that is available to provide the analytics information of the UE requested by the application function.

11. The network data analytics function of claim 9,
wherein the controller is configured to:
transmit an event subscription request message requesting provision of event information on movement of the UE to the AMF, and
receive an event report message including information indicating an occurrence of an event for the UE from the AMF in case that the event for the UE occurs.

12. The network data analytics function of claim 11,
wherein the information indicating the occurrence of the event includes at least one of an identifier of the UE, a type of the event, or a current location information of the UE.

13. The network data analytics function of claim 11,
wherein the controller is configured to:
determine, based on a reception of the event report message, whether the network data analytics function is available to provide the analytics information of the UE requested by the application function, and
select at least one target network data analytics function that is available to provide the analytics information of the UE requested by the application function in case that the network data analytics function determines that the analytics information of the UE requested by the application function is not available to be provided.

14. The network data analytics function of claim 13,
wherein the controller is configured to:
transmit an analytics subscription request message for providing the analytics information of the UE requested by the application function to the target network data analytics function, and
receive an analytics subscription response message consenting to the provision of the analytics information of the UE requested by the application function from the target network data analytics function.

15. The network data analytics function of claim 14,
wherein the controller is configured to:
receive first analytics information on the UE from the target network data analytics function,
generate third analytics information based on the first analytics information on the UE received from the target network data analytics function and second analytics information for the UE collected by the network data analytics function, and
report the third analytics information to the application function.
